Europäisches Patentamt

European Patent Office

Office européen des brevets

(19)

(11) Numéro de publication: **0 064 954**
**A2**

(12) **DEMANDE DE BREVET EUROPEEN**

(21) Numéro de dépôt: **82810197.2**

(22) Date de dépôt: **11.05.82**

(51) Int. Cl.³: **A 61 C 5/08**

(30) Priorité: **13.05.81 CH 3099/81**

(43) Date de publication de la demande:
**17.11.82 Bulletin 82/46**

(84) Etats contractants désignés:
**AT BE DE FR GB IT NL SE**

(71) Demandeur: **CENDRES ET METAUX S.A.**
**122, route de Boujean**
**CH-2501 Bienne(CH)**

(72) Inventeur: **Guglielmetti, Silvio**
**c/o Cendres & Metaux S.A. 122, route de Boujean**
**CH-2501 Bienne(CH)**

(54) **Procédé de réglage pour un élément à friction ou de rétention dentaire et outils pour la mise en oeuvre de ce procédé.**

(57) Pour activer ou désactiver de façon régulière et précise un élément à friction ou de rétention dentaire constitué d'un corps dont la partie supérieure est évidée et comprend plusieurs segments et dont la partie inférieure comporte un trou taraudé on introduit dans la partie supérieure du corps de l'élément à friction ou de rétention une tête d'outil comportant successivement un filetage sur une tige et un pivot conique, respectivement un cône creux, que l'on visse ensuite dans le trou taraudé de la partie inférieure du corps de l'élément à friction ou de rétention.

EP 0 064 954 A2

Croydon Printing Company Ltd.

Procédé de réglage pour un élément à friction ou
de rétention dentaire et outils pour la mise en
oeuvre de ce procédé

On utilise, en médecine dentaire, des attachements, soit des ancrages, des glissières ou encore des barres, qui peuvent être munis d'un ou plusieurs éléments à friction ou de rétention. Ces derniers peuvent être constitués d'un corps de forme cylindrique ou cylindro-conique dont une partie est évidée et segmentée et dont l'autre comporte un trou taraudé dans l'axe et dans le prolongement de la première. La partie évidée et segmentée est destinée à être insérée dans un contre-corps. Plus le ou les segments qu'elle possède ou qui la composent sont écartés, plus sa force de friction ou de rétention dans le contre-corps sera grande. Au contraire, plus le ou les dits segments sont resserrés, plus

- 2 -

sa force de friction ou de rétention dans le contre-
corps sera faible.

Une certaine force de friction ou de rétention du corps
prédécrit dans son contre-corps est évidemment nécessaire pour assurer la tenue de la prothèse en bouche. Mais
cette force est notamment limitée par des données physiologiques, par exemple par la résistance des dents
naturelles à la force d'extraction. D'autre part, elle
est aussi limitée de par le fait même de la prothèse
dont le bon fonctionnement doit être assuré, c'est-à-
dire qui doit pouvoir être mise en place et retirée
aisément. On considère généralement que la dite force
de friction ou de rétention est située entre 600gr au
minimum et 800gr au maximum.

La mise en place et le retrait répétés de la prothèse
provoquent une usure de l'élément à friction ou de rétention qui met en péril la tenue de la prothèse en
bouche.

Le praticien est donc confronté à deux problèmes. D'une
part, au moment de la pose de la prothèse il doit procéder au réglage de la force de friction ou de rétention de l'élément de l'attachement qui assure cette force et, d'autre part, en cas d'usure de cet élément, il
doit pouvoir le réactiver. Malheureusement, il ne dispose que de moyens empiriques pour parvenir à ses fins.
Il est obligé de recourir par exemple à un scalpel, à
un quelconque instrument conique ou à un tournevis pour
activer ou, au contraire, désactiver les segments de
l'élément à friction ou de rétention. Le résultat de
son action dépend de son doigté, de son expérience et

- 3 -

également du hasard. Il est dès lors difficile pour le praticien de doser correctement l'écartement ou le resserrement des segments de l'élément à friction ou de rétention. En outre, il est fréquent qu'ensuite de leur manipulation les dits segments ne présentent pas, entre eux, le même écartement ou le même resserrement. La cassure d'un ou plusieurs segments peut en résulter qui met en péril la tenue en bouche de la prothèse.

L'invention vise à pallier ces inconvénients.

Dans le procédé d'activation selon l'invention,

a) on introduit dans la partie évidée et segmentée de l'élément à friction ou de rétention dentaire une tête d'outil portant successivement un filetage sur une tige ainsi qu'un pivot conique,

b) on visse la partie filetée de la tête d'outil dans le trou taraudé de la partie non segmentée de l'élément situé dans l'axe et dans le prolongement de l'évidement de la partie segmentée de l'élément jusqu'à ce que le pivot conique de la tête d'outil vienne prendre appui sur les bords intérieurs des segments,

c) on visse la tête d'outil jusqu'à obtenir l'écartement recherché des segments.

Dans le procédé de désactivation selon l'invention,

a) on introduit dans la partie évidée et segmentée de l'élément à friction ou de rétention dentaire une tête d'outil portant successivement un filetage sur une tige ainsi qu'un cône creux,

b) on visse la partie filetée de la tête d'outil dans le trou taraudé de la partie non segmentée de l'élément situé dans l'axe et dans le prolongement de l'évidement de la partie segmentée de l'élément jusqu'à ce que le cône creux de la tête d'outil vienne prendre appui sur les bords extérieurs des segments,

c) on visse la tête d'outil jusqu'à obtenir le resserrement recherché des segments.

Dans l'outil pour la mise en oeuvre du procédé d'activation de l'élément à friction ou de rétention dentaire, la tête d'outil porte successivement un filetage sur une tige ainsi qu'un pivot conique.

Dans l'outil pour la mise en oeuvre du procédé de désactivation de l'élément à friction ou de rétention dentaire, la tête d'outil porte successivement un filetage sur une tige ainsi qu'un cône creux.

Les dessins annexés représentent, à titre d'exemple, un élément à friction dentaire, un élément de rétention dentaire ainsi qu'une forme d'exécution possible des outils selon l'invention et pour la mise en oeuvre du procédé selon l'invention.

La fig. 1 est une vue en coupe transversale partielle et une vue de face partielle d'un élément à friction.

La fig. 2 est une vue de dessus de l'élément à friction selon la fig. 1.

La fig. 3 est une vue en coupe transversale partielle et une vue de face partielle d'un élément de rétention.

La fig. 4 est une vue de dessus de l'élément de rétention selon la fig. 3.

La fig. 5 est une vue en coupe transversale de l'outil pour la mise en oeuvre du procédé d'activation de l'élément à friction ou de rétention.

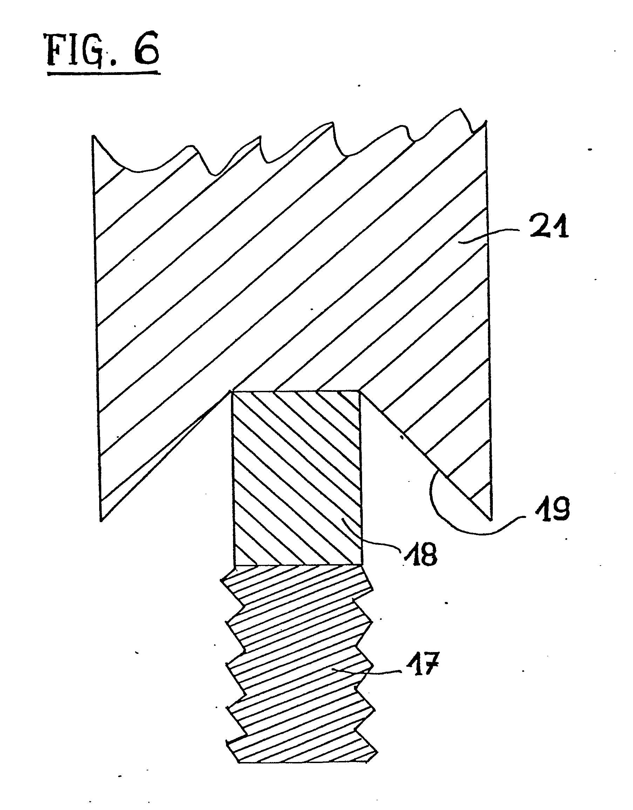

La fig. 6 est une vue en coupe transversale de l'outil pour la mise en oeuvre du procédé de désactivation de l'élément à friction.

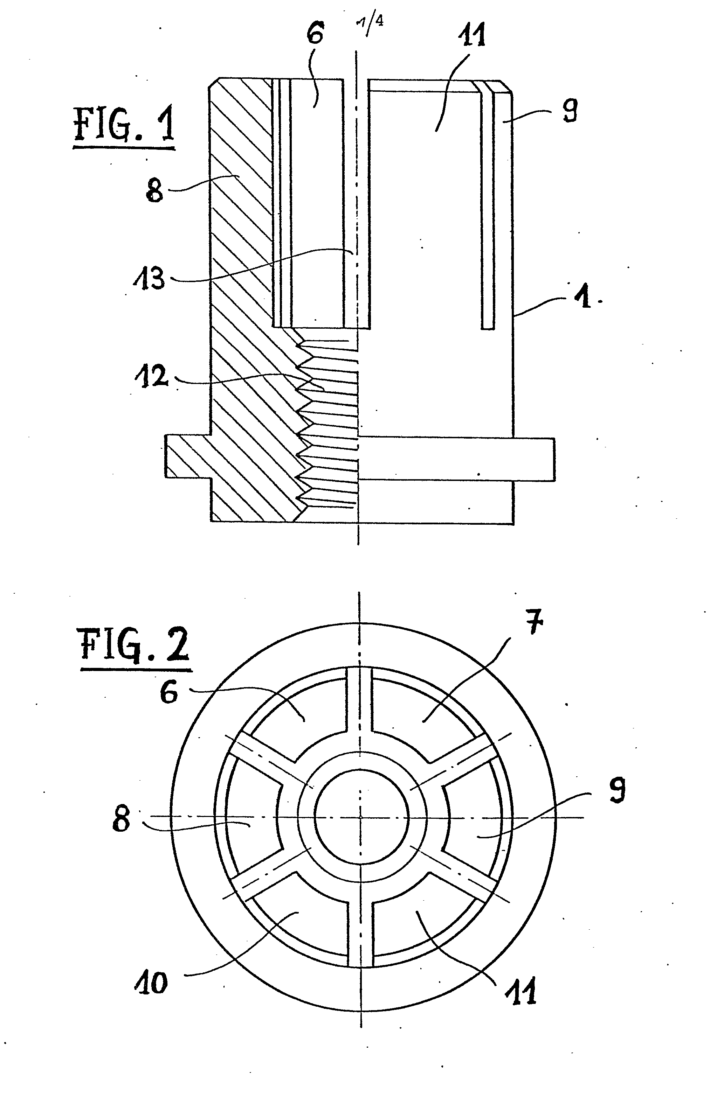

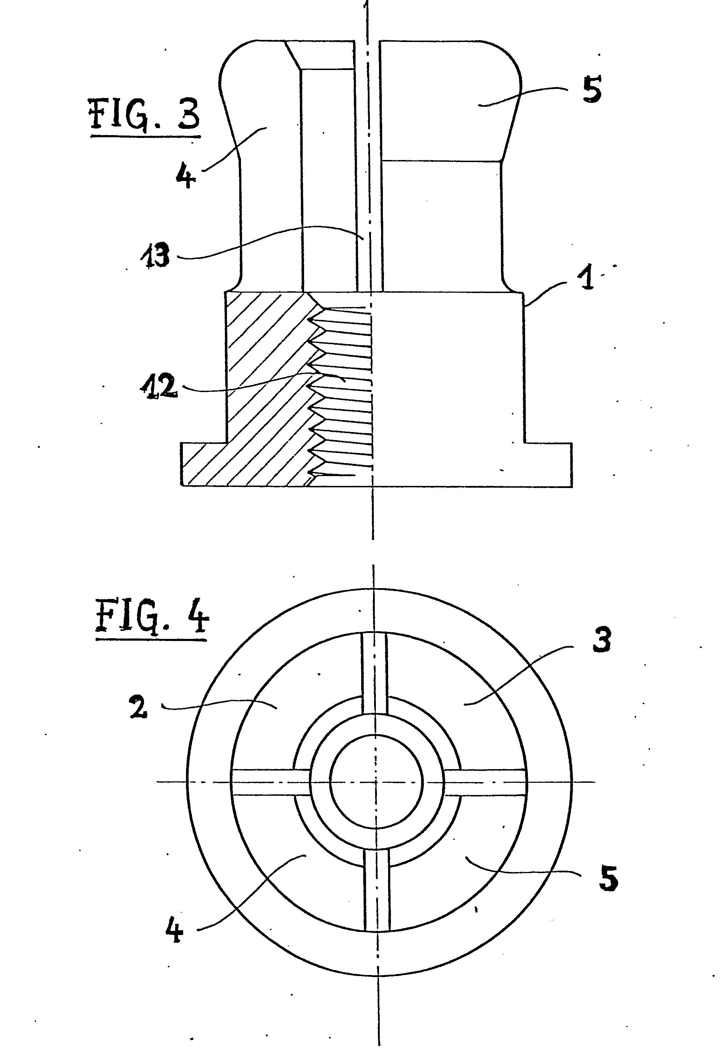

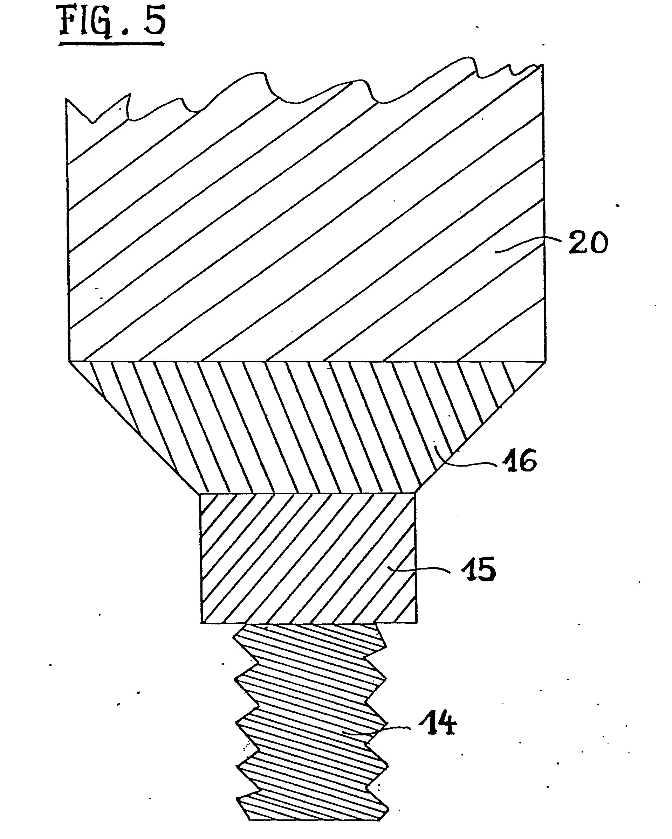

L'élément à friction de la fig. 1 tout comme l'élément de rétention de la fig. 3 est constitué d'un corps 1 dont la partie supérieure est évidée et comporte plusieurs segments, soit, respectivement les segments 6, 7, 8, 9, 10, 11 selon les fig. 1 et 2 et 2, 3, 4, 5 selon les fig. 3 et 4. La partie segmentée de l'élément à friction selon la fig. 1 et de l'élément de rétention selon la fig. 3 est destinée à être insérée dans un contre-corps non représenté. Dans sa partie inférieure, le corps 1 selon les fig. 1 et 3 comporte un trou taraudé 12 situé précisément dans le prolongement et dans l'axe de l'évidement 13 de sa partie supérieure.

Pour procéder à un écartement régulier, soit pour activer les segments 6, 7, 8, 9, 10, 11 selon les fig. 1 et 2 et 2, 3, 4, 5 selon les fig. 3 et 4, il suffit d'introduire dans l'évidement 13 une tête d'outil comportant successivement un filetage 14 sur une tige 15 et un pivot conique 16 de telle façon que la partie filetée 14 de la tête d'outil finisse par se visser dans le trou taraudé 12 et que son pivot conique 16 vienne prendre appui sur les bords intérieurs des segments 6, 7, 8, 9, 10, 11 selon les fig. 1 et 2 et 2, 3, 4, 5 selon les fig. 3 et 4. En fonction du nombre de tours que l'on imprimera à la tête d'outil prédécrite on augmentera proportionnellement la force de friction ou de rétention du corps 1 dans son contre-corps. Un repère quelconque sur la tête d'outil permettra à l'utilisateur de décompter le nombre de tours à elle imprimés.

Pour procéder à un resserrement régulier pour désactiver les segments 6, 7, 8, 9, 10, 11 selon les fig. 1 et 2 et 2, 3, 4, 5 selon les fig. 3 et 4, il suffit d'introduire dans l'évidement 13 une tête d'outil comportant successivement un filetage 17 sur une tige 18 et un cône creux 19 de telle façon que la partie filetée 17 de la tête d'outil finisse par se visser dans le trou taraudé 12 et que son cône creux 19 vienne prendre appui sur les bords extérieurs des segments 6, 7, 8, 9, 10, 11 selon les fig. 1 et 2 et 2, 3, 4, 5 selon les fig. 3 et 4. En fonction du nombre de tours que l'on imprimera à la tête d'outil prédécrite, on diminuera proportionnellement la force de friction ou de rétention du corps 1 dans son contre-corps. Un repère quelconque sur la tête d'outil permettra également à l'utilisateur de décompter le nombre de tours à elle imprimés.

Grâce au procédé selon l'invention et aux outils pour sa mise en oeuvre, le praticien dispose de moyens simples et efficaces pour assurer et contrôler en tout temps la tenue de la prothèse en bouche selon chaque cas particulier.

<u>REVENDICATIONS</u>

1. Procédé d'activation pour un élément à friction ou de rétention dentaire caractérisé en ce que :

a) on introduit dans la partie évidée (13) et segmentée de l'élément (1) une tête d'outil portant successivement un filetage (14) sur une tige (15) ainsi qu'un pivot conique (16),

b) on visse la partie filetée (14) de la tête d'outil dans le trou taraudé (12) de la partie non segmentée de l'élément (1) situé dans l'axe et dans le prolongement de l'évidement (13) de la partie segmentée de l'élément (1) jusqu'à ce que le pivot conique (16) de la tête d'outil vienne prendre appui sur les bords intérieurs des segments (6, 7, 8, 9, 10, 11 fig. 1, 2; 2, 3, 4, 5 fig. 3, 4),

c) on visse la tête d'outil jusqu'à obtenir l'écartement recherché des segments (6, 7, 8, 9, 10, 11 fig. 1, 2; 2, 3, 4, 5 fig. 3, 4).

2. Procédé de désactivation pour un élément à friction ou de rétention dentaire caractérisé en ce que :

a) on introduit dans la partie évidée (13) et segmentée de l'élément (1) une tête d'outil portant successivement un filetage (17) sur une tige (18) ainsi qu'un cône creux (19),

b) on visse la partie filetée (17) de la tête d'outil dans le trou taraudé (12) de la partie non segmentée de l'élément (1) situé dans l'axe et dans le prolongement (13) de l'évidement de la partie segmentée de l'élément (1) jusqu'à ce que le cône creux (19) de la tête d'outil vienne prendre appui sur les bords extérieurs des segments (6, 7, 8, 9, 10, 11, fig. 1, 2;

2, 3, 4, 5 fig. 3, 4),

c) on visse la tête d'outil jusqu'à obtenir le resserrement recherché des segments (6, 7, 8, 9, 10, 11
fig. 1, 2; 2, 3, 4, 5 fig. 3, 4).

3. Outil pour la mise en oeuvre du procédé selon la revendication 1 comprenant un manche (20) caractérisé en
ce que sa tête porte successivement un filetage (14)
sur une tige (15) ainsi qu'un pivot conique (16).

4. Outil pour la mise en oeuvre du procédé selon la revendication 2 comprenant un manche (21) caractérisé en
ce que sa tête porte successivement un filetage (17)
sur une tige (18) ainsi qu'un cône creux (19).

FIG. 1

FIG. 2

0064954

FIG. 3

5

4

13

42

1

FIG. 4

2

3

4

5

FIG. 5

# FIG. 6

21

19

18

17